# FASCICULE DE BREVET EUROPEEN

(11) **EP 3 216 641 B1**
(45) Date de publication et mention de la délivrance du brevet: **18.09.2019**
(21) Numéro de dépôt: 17157457.7
(22) Date de dépôt: 22.02.2017
(51) Int. Cl.: B60K 15/035, B60K 15/03

(54) **RÉSERVOIR À TUYAU DE DÉGAZAGE**
TANK MIT ENTGASUNGSSCHLAUCH
TANK WITH VENTING PIPE

(30) Priorité: 08.03.2016 FR 1651904
(43) Date de publication de la demande: 13.09.2017
(73) Titulaire: PSA Automobiles SA, 78300 Poissy (FR)
(72) Inventeur: MIGNON, Stephane, 78380 Bougival (FR)

(56) Documents cités:
- EP-A1- 2 818 351
- DE-A1-102014 225 119
- US-A- 5 819 796

## Description

L'invention se rapporte à un réservoir de liquide, en particulier de carburant ou de fluide consommable comportant un tuyau de dégazage, de type anti-refouleur, permettant un remplissage de liquide sécurisé en empêchant tout refoulement. Un tel réservoir est destiné plus particulièrement, mais pas exclusivement, aux véhicules automobiles. L'invention se rapporte aussi à un véhicule automobile équipé d'au moins un tel réservoir.

L'invention concerne le domaine du remplissage des réservoirs de liquide notamment pour véhicules automobiles. Un tel réservoir comprend une cuve destinée à contenir du carburant ou un liquide additionnel, comme l'additif appelé « SCR » (acronyme des termes anglais « Selective Catalytic Réduction » pour réduction catalytique sélective en terminologie française) à base d'une solution d'urée pour réduire chimiquement les oxydes d'azote NOx des gaz d'échappement des moteurs Diesel. Ce réservoir comporte classiquement un tuyau de remplissage de liquide monté sur la cuve et un tuyau de dégazage reliant la cuve au tuyau de remplissage.

Dans le cas d'un réservoir de véhicule, le tuyau de remplissage permet de relier la cuve à une ouverture accessible de l'extérieur du véhicule pour effectuer le remplissage de la cuve, cette ouverture étant en général agencée sur la carrosserie du véhicule. L'ouverture est fermée par un bouchon en-dehors de la période de remplissage, et permet l'introduction de liquide lors du remplissage par un pistolet approprié.

Pendant le remplissage de la cuve, le tuyau de dégazage permet d'évacuer tout excès d'air et de vapeur - par exemple de vapeur d'urée dans le cas d'un liquide SCR - ou, de manière générale, tout mélange de gaz contenu dans la cuve. Cependant, des risques de débordement persistent du fait de l'augmentation de pression dans la cuve et de la difficulté d'adaptation au rythme du remplissage.

Pour répondre aux contraintes de sécurité lors du remplissage, des améliorations ont été apportées à ce type de réservoir. Ainsi, pour bloquer la sortie de liquide en cas de retournement du véhicule, le document de brevet FR 2 686 048 propose un tuyau de dégazage pourvu d'une masselotte bloquant la sortie de liquide par le tuyau de dégazage. Par ailleurs, afin d'empêcher la remontée d'essence dans le tuyau de dégazage, la publication de brevet DE 24 46 838 présente une soupape pouvant se refermer à l'entrée du tuyau de dégazage. Et pour empêcher un refoulement de liquide dans le tuyau de dégazage, le brevet FR 2 561 594 propose de bloquer ce refoulement avec un système à bille. Il est également connu du document US 5,819,796 un réservoir de carburant avec un tuyau de dégazage plongeant dans le réservoir en regard de la surface du carburant dans le réservoir.

Afin de permettre un gain de place au-dessus du réservoir pour d'autres équipements ou pour augmenter l'habitacle, la prise du tuyau de dégazage est placée latéralement sur un côté de la cuve, comme cela est déjà le cas pour le tuyau de remplissage du réservoir.

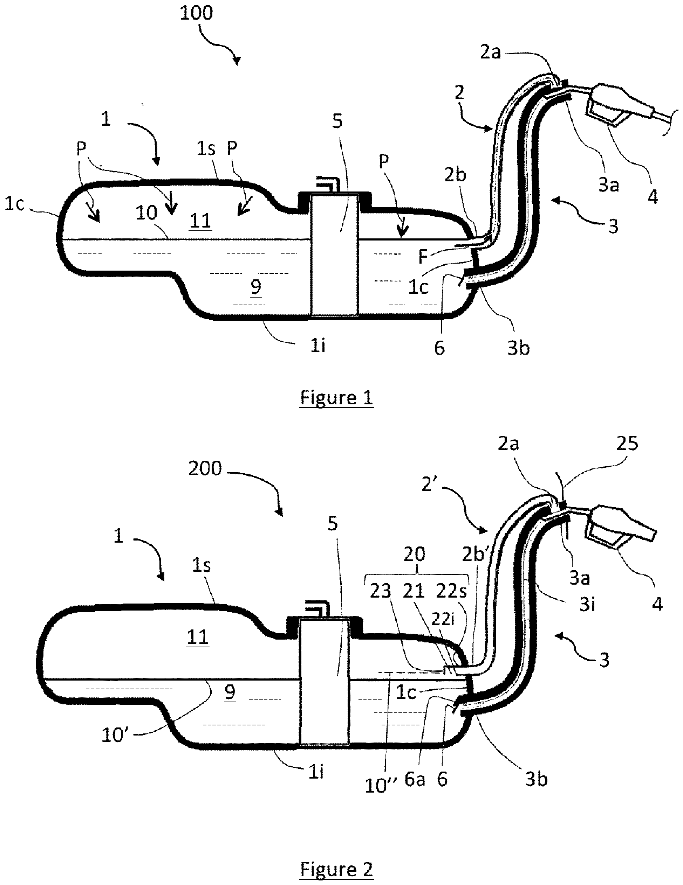

Ce type de solution est présenté sur la figure 1. Sur cette figure est présenté un schéma en coupe longitudinale d'un réservoir de véhicule 100. Ce réservoir de liquide 100 comporte une cuve 1 avec une paroi supérieure 1s, une paroi inférieure 1i et une paroi latérale 1c. Ce réservoir 100 contient un liquide 9, ce liquide est ici du liquide SCR, mais pourrait être tout autre type de liquide, par exemple du carburant. Ce réservoir 100 comporte un module « jauge pompe » 5, servant à pomper le liquide 9 pour être utilisé par le véhicule dans lequel ce réservoir 100 est installé.

Le réservoir 100 comporte également un tuyau de remplissage 3 présentant une portion supérieure 3a dans laquelle pénètre un pistolet 4 de remplissage. Une portion inférieure 3b du tuyau de remplissage 3 est reliée à la paroi latérale de cuve 1c. Ce réservoir 100 est également équipé d'un tuyau de dégazage 2 dont une extrémité inférieure 2b est reliée à la paroi latérale de cuve 1c et une extrémité supérieure 2a reliée à la portion supérieure 3a du tuyau de remplissage 3.

Dans cet exemple, la portion inférieure 3b du tuyau de remplissage 3 comporte un clapet de fermeture 6 pouvant se refermer avec l'augmentation de la pression (flèches « P ») du gaz 11 régnant au-dessus du niveau 10 de liquide 9, lorsque ce liquide 9 monte au-dessus d'un niveau déterminé. Mais lorsque le niveau 10 monte, le liquide 9 a tendance à entrer lentement dans la partie inférieure 2b du tuyau de dégazage 2 (flèche « F »), si bien que l'augmentation de pression « P » de gaz est lente, entrainant une fermeture ralentie du clapet 6. Il en résulte un risque de refoulement de liquide du tuyau de dégazage 2.

Un exemple de ce type de réservoir, avec prise du tuyau de dégazage placée latéralement sur un côté de la cuve comme celle du tuyau de remplissage, est présenté dans le document de brevet EP 479 523. Dans ce document, une séparation interne à la cuve est agencée autour de l'entrée du tuyau de dégazage. Cette disposition permet d'éviter l'intrusion de liquide dans le tuyau de dégazage lorsque le niveau de liquide s'élève lors du remplissage: en cas de montée trop importante de liquide dans la cuve, le gaz au-dessus du liquide est piégé dans un volume défini par la séparation, ce qui stoppe l'arrivée de liquide excédentaire via le tuyau de remplissage, et empêche alors la montée de liquide dans le tuyau de dégazage. Mais une telle solution apporte un problème : le liquide contenu dans le réservoir risque de remonter dans le tuyau de dégazage.

Un autre exemple de protection du tuyau de dégazage placé en position latérale est présenté dans la demande de brevet DE 10 2013 213 068, dans lequel le tuyau de dégazage d'un réservoir de liquide SCR est prolongé dans la cuve par une zone évasée, cette zone évasée offrant un espace supplémentaire pour le liquide SCR gazeux ou condensé.

Malgré ces améliorations, un refoulement de liquide par le tuyau de dégazage peut se produire en cas de pression trop forte d'entrée de liquide, ce qui arrive en général dans une station-service au moment où l'utilisateur remplit le réservoir. En effet, la pression du liquide entrant est suffisamment forte pour s'opposer à la pression du gaz piégé en haut du liquide lorsque le réservoir est presque plein, ce qui entraine un refoulement de liquide via le tuyau de dégazage.

Ainsi, aucune des solutions proposées n'apporte de solution fiable au refoulement de liquide par le tuyau de dégazage. Pour palier ce problème, l'invention a pour objectif principal de réguler le niveau de liquide dans la cuve. Pour ce faire, il est proposé d'utiliser une extrémité du tuyau de dégazage pénétrant dans la cuve pour provoquer, par une configuration adaptée, la fermeture du tuyau de remplissage lorsque le niveau du liquide pénètre dans cette extrémité.

A ce titre, la présente invention a pour objet un réservoir de liquide à tuyau de dégazage de type anti-refouleur comportant une cuve composée d'une paroi latérale reliée sensiblement perpendiculairement à des parois supérieure et inférieure, et pouvant contenir en utilisation un liquide jusqu'à un niveau maximal déterminé. De plus, ce réservoir comporte un tuyau de remplissage, présentant une portion inférieure reliée à la paroi latérale de la cuve et munie d'un clapet de fermeture, ainsi qu'un tuyau de dégazage présentant une extrémité inférieure reliée sensiblement perpendiculairement à la paroi latérale de la cuve sensiblement audit niveau maximal déterminé, et une extrémité supérieure reliée à une portion supérieure du tuyau de remplissage. Dans ce réservoir, l'extrémité inférieure du tuyau de dégazage se prolonge dans la cuve par un embout borgne sensiblement parallèle aux parois supérieure et inférieure de la cuve, et pourvu d'une ouverture « sifflet » aménagée globalement en regard de la paroi inférieure de la cuve.

Ainsi, lors d'un remplissage, la montée de liquide est brusquement bloquée dans le tuyau de dégazage à un niveau correspondant audit niveau maximal déterminé lorsqu'il franchit l'ouverture « sifflet », ce qui provoque une brusque augmentation de pression interne à la cuve et génère une fermeture quasi-immédiate du tuyau de remplissage par le clapet.

Selon des modes de réalisation particulièrement avantageux :
- l'embout borgne du tuyau de dégazage est composé d'une paroi cylindrique terminée par une paroi de fond et présentant une demi-paroi inférieure dans laquelle est découpée l'ouverture « sifflet » ;
- l'ouverture « sifflet » présente une découpe de forme choisie entre oblongue, circulaire et polygonale, en particulier rectangulaire, et s'étendant longitudinalement dans la demi-paroi inférieure dans une mesure adaptée pouvant atteindre la paroi de fond de l'embout et la paroi latérale de la cuve;

Selon l'invention, l'ouverture « sifflet » présente une étendue suffisante pour permettre un écoulement aéraulique de gaz dans le tuyau de dégazage, tout en étant suffisamment limitée pour bloquer le liquide dans l'embout lorsque le niveau de liquide atteint l'ouverture sifflet;
Selon d'autres modes de réalisation:
- la cuve peut comporter une cloison interne s'étendant depuis la paroi supérieure de la cuve jusqu'à un niveau inférieur au niveau de liquide maximal déterminé, cette cloison interne divisant la cuve en une zone principale de remplissage de liquide et une zone annexe dans laquelle se trouve l'embout du tuyau de dégazage afin d'isoler une réserve gazeuse dans la partie supérieure de la zone annexe ;
- le clapet de fermeture du tuyau de remplissage est couplé à un taquet pour en limiter l'ouverture.

Dans le présent texte, les qualificatifs de position, « supérieur », « inférieur », « haut », « bas » ou « horizontal », se rapportent aux localisations relatives d'éléments d'un réservoir de véhicule en utilisation standard et en référence à la force de gravitation (en considérant le véhicule disposé sur un plan horizontal). Les qualificatifs « interne » et « intérieur » se réfèrent à la position d'éléments à l'intérieur d'un véhicule ou d'une cuve. Et le qualificatif « longitudinal » se réfère à une extension le long d'une dimension principale. Sur les figures, des éléments identiques ou similaires sont repérés par un même signe de référence qui renvoie au(x) passage(s) qui le décrive(nt).

D'autres données, caractéristiques et avantages de la présente invention apparaîtront à la lecture de la description non limitée qui suit, en référence aux figures annexées qui représentent, respectivement :
- la figure 1, le schéma en coupe longitudinale d'un réservoir du type à prise latérale selon l'état de la technique (déjà commentée);
- la figure 2, un schéma en coupe longitudinale d'un exemple de réservoir selon l'invention équipé d'un tuyau de dégazage à embout interne à la cuve et pourvu d'une ouverture « sifflet », et;
- les figures 3a et 3b, des vues partielles en perspective et en coupe longitudinale d'un autre exemple de réalisation d'un réservoir à embout à ouverture « sifflet » selon l'invention.

Le schéma d'un exemple de réservoir 200 selon l'invention contenant du liquide « SCR » 9 destiné à un véhicule à moteur diesel est illustré par la vue en coupe longitudinale de la figure 2.

Comme le réservoir 100 de la figure 1, ce réservoir 200 comporte la cuve 1 formée de parois supérieure 1s et inférieure 1i, reliées par la paroi latérale 1c, le module «jauge pompe » 5 intégrée à la cuve 1, le tuyau de remplissage 3 avec sa portion supérieure 3a fixée à la carrosserie 25 et sa portion inférieure 3b traversant la paroi latérale de cuve 1c et muni d'un clapet de fermeture 6 en son extrémité. Avantageusement, l'amplitude d'ouverture du clapet 6 est limitée par un taquet 6a.

De plus, le tuyau de dégazage 2' présente une portion inférieure 2b' sensiblement horizontale et montée traversante sur la paroi latérale de cuve 1c, ainsi que l'extrémité supérieure 2a qui communique avec la zone d'écoulement interne 3i du tuyau de remplissage 3 au niveau de sa portion supérieure 3a.

Cette portion inférieure 2'b du tuyau de dégazage 2' possède une terminaison formant un embout 20 qui s'étend horizontalement dans la cuve 1. Cet embout 20 est composé, géométriquement, d'une paroi cylindrique 22 formée de de deux demi-parois: une demi-paroi supérieure 22s, orientée vers la paroi supérieure 1s, et une demi-paroi inférieure 22i orientée vers la paroi intérieure 1i.

Une ouverture dite « ouverture sifflet » 21 - du fait de sa position proche de l'extrémité d'un tube cylindrique comme dans un sifflet - est découpée dans la demi-paroi inférieure 22i. Ainsi, cette ouverture 21 présente également une orientation centrée vers le bas et fait face à la paroi inférieure 1i de la cuve 1. L'embout 20 se termine par un fond 23 qui s'étend perpendiculairement aux demi-parois 22s et 22i, pour former un embout « borgne » dans la mesure où il fait abstraction de l'ouverture 21

Pour réaliser un tel embout 20, il est possible de solidariser cet embout au reste du tuyau de dégazage 2' au niveau de la paroi latérale 1c. Alternativement, le tuyau de dégazage se prolonge dans la cuve 1, au-delà de la paroi latérale 1, pour former l'embout 20. La forme de l'ouverture 21 peut être circulaire ou oblongue.

. La figure 2 représente l'ouverture 21 au-dessus du niveau 10' du liquide 9 à un instant de remplissage de la cuve 1 avant que le niveau de liquide 10' n'atteigne l'ouverture sifflet 21. Puis, le remplissage de la cuve 1 se poursuivant par actionnement du pistolet 4, le niveau 10' monte jusqu'à atteindre le niveau maximal 10" (indiqué en traits pointillés). Le gaz 11 présent au-dessus du liquide 9 - formé d'air, de vapeur, et d'urée provenant du liquide SCR - est également présent dans le tuyau de dégazage 2' définissant un régime dit « aéraulique ». alors que le liquide 9 atteint le niveau maximal 10", le régime aéraulique commute en régime hydraulique de début de remontée de liquide 9 dans le tuyau de dégazage 2'.

La transition entre ces deux régimes dans le tuyau de dégazage 2' est rendue quasi-instantanée par l'augmentation brusque de pression dans la cuve 1 provoquée par le blocage du front de liquide 9 contre l'ouverture sifflet 21. Une telle augmentation brusque de pression entraîne également la fermeture quasi-immédiate de la valve de fermeture 6 du tuyau de remplissage 3 et stoppe la montée du liquide 9 à ce niveau maximal 10", ce qui évite tout refoulement de liquide 9 dans le tuyau de dégazage 2'.

L'ouverture sifflet 21 présente une étendue qui résulte d'un compromis: cette étendue est suffisante pour permettre un écoulement aéraulique de gaz dans le tuyau de dégazage 2', tant que le niveau du liquide 9 n'atteint pas le niveau maximum 10"; et cette étendue reste suffisamment limitée pour provoquer un blocage de liquide 9 dans l'embout 20 lorsque le liquide atteint l'ouverture sifflet 21, générant une perte de charge de l'écoulement hydraulique dans le tuyau de dégazage 2'. Cette perte de charge provoque alors l'augmentation brusque de pression interne dans la cuve 1.

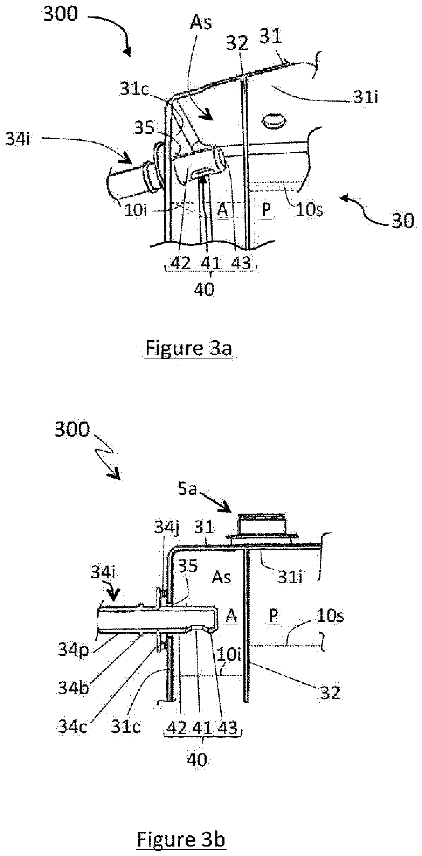

Les vues en perspective et en coupe longitudinale d'un autre exemple de réalisation d'un réservoir 300 selon l'invention sont illustrées partiellement sur les figures 3a et 3b.

Le réservoir 300 se présente globalement comme le réservoir 200 de la figure 2. Cependant, dans cet exemple, la cuve 30 est divisée en deux zones de remplissage de liquide, une zone annexe « A » et une zone principale « P » par une cloison interne 32 s'étendant vers le bas depuis la face interne 31i de la paroi supérieure 31 de la cuve 30, sans atteindre la paroi inférieure de cuve (similaire à celle référencée 1i sur la figure 2). Sur ces figures, apparaissent également une portion inférieure de dégazage 34i du tuyau de dégazage 2' de la figure 2, un orifice 35 découpé dans la paroi latérale 31c à travers lequel la portion 34i se prolonge par un embout borgne 40 dans la cuve 30, et une tête de module « jauge-pompe » 5a.

La cloison interne 32 permet d'isoler une réserve gazeuse dans une partie supérieure « As » de la zone annexe « A » où prend naissance le flux de gaz se dirigeant vers la partie inférieure de tuyau de dégazage 34i en évitant la montée de liquide dans la portion inférieure de dégazage 34i en induisant un niveau de liquide 10i dans la zone « A » inférieur au niveau de liquide 10s dans la zone « P » de la cuve 30.

Dans cet exemple de réalisation, l'embout 40 comporte une paroi cylindrique 42 pourvue d'une ouverture 41 orientée vers le bas, ainsi que d'une paroi de fond biseautée 43, placée à l'extrémité de cet embout 40.

Comme cela apparaît plus précisément sur la vue en coupe de la figure 3b, la peau 34p de la portion inférieure de dégazage 34i forme une collerette 34c qui vient se fixer par un joint de colle ou de soudure 34j, sur la face externe 31a de la paroi latérale 31c. L'embout 40 est emmanché dans la peau 34p par sertissage, formant un bossage 34b, pour venir en prolongement de la portion inférieure de dégazage 34i.

L'invention n'est pas limitée aux exemples de réalisation décrits et représentés. Ainsi elle pourrait s'appliquer au remplissage d'un réservoir d'une installation fixe équipée d'un tuyau de dégazage.

Par ailleurs, l'articulation du clapet de fermeture du tuyau de remplissage peut être simple, ou réalisée avec une charnière étanche, ou encore en collaboration avec un taquet permettant de limiter son amplitude d'ouverture.

De plus, l'ouverture « sifflet » peut être de forme variée autre que oblongue ou circulaire, par exemple polygonale et en particulier rectangulaire.

## Revendications

1. Réservoir de liquide à tuyau de dégazage de type anti-refouleur, (200; 300) comportant une cuve (1; 30), composée d'une paroi latérale (1c; 31c) reliée à des parois supérieure (1s; 31) et inférieure (1i), pouvant contenir en utilisation un liquide (9) jusqu'à un niveau maximal déterminé (10"), comportant un tuyau de remplissage (3) présentant une portion inférieure (3b) reliée à la paroi latérale (1c) de la cuve (1; 30), ainsi qu'un tuyau de dégazage (2') présentant une extrémité inférieure (2b') reliée perpendiculairement à la paroi latérale (1c) de la cuve (1; 30) audit niveau maximal déterminé (10"), et une extrémité supérieure (2a) reliée à une portion supérieure (3a) du tuyau de remplissage (3), **caractérisé en ce que** ladite portion inférieure (3b) est munie d'un clapet de fermeture (6), et **en ce que** l'extrémité inférieure (2b') du tuyau de dégazage (2') se prolonge dans la cuve par un embout borgne (20; 40) parallèle aux parois supérieure et inférieure de la cuve (1; 30) et pourvu d'une ouverture « sifflet » (21; 41) aménagée en regard de la paroi inférieure (1i) de la cuve (1; 30), ladite ouverture « sifflet » (21, 41) présentant une étendue suffisante pour permettre un écoulement aéraulique de gaz dans le tuyau de dégazage (2'), tout en étant suffisamment limitée pour bloquer le liquide (9) dans l'embout lorsque le niveau de liquide (10", 10i) atteint l'ouverture « sifflet » (21, 41).

2. Réservoir de liquide à tuyau de dégazage selon la revendication précédente, **caractérisé en ce que** la cuve (1; 30) est composée d'une paroi latérale (1c; 31c) reliée perpendiculairement à des parois supérieure (1s; 31) et inférieure (1i).

3. Réservoir de liquide à tuyau de dégazage anti-refouleur (200; 300) selon la revendication 1 ou 2, dans lequel l'embout borgne (20 ; 40) du tuyau de dégazage (2') est composé d'une paroi cylindrique (22 ; 42) terminée par une paroi de fond (23,43) et présentant une demi-paroi inférieure (22i) dans laquelle est découpée l'ouverture « sifflet » (21, 41).

4. Réservoir de liquide à tuyau de dégazage anti-refouleur (200; 300) selon l'une quelconque des revendications précédentes, dans lequel l'ouverture « sifflet » (21, 41) présente une découpe de forme choisie entre oblongue, circulaire et polygonale, et s'étendant longitudinalement dans la demi-paroi inférieure (22i) dans une mesure adaptée pouvant atteindre la paroi de fond de l'embout (23, 43) et la paroi latérale (1c, 31c) de la cuve (1, 30).

5. Réservoir selon la revendication précédente, **caractérisé en ce que** l'ouverture « sifflet » (21, 41) présente une découpe de forme rectangulaire.

6. Réservoir de liquide à tuyau de dégazage anti-refouleur (200; 300) selon l'une quelconque des revendications précédentes, dans lequel la cuve (30) comporte une cloison interne (32) s'étendant depuis la paroi supérieure (31) de la cuve (30) jusqu'à un niveau inférieur au niveau de liquide maximal déterminé (10"), cette cloison interne (31) divisant la cuve (30) en une zone principale (P) de remplissage de liquide et une zone annexe (A) dans laquelle se trouve l'embout du tuyau de dégazage (40) afin d'isoler une réserve gazeuse dans la partie supérieure (As) de la zone annexe (A).

7. Réservoir de liquide à tuyau de dégazage anti-refouleur (200; 300) selon l'une quelconque des revendications précédentes, dans lequel le clapet de fermeture (6) du tuyau de remplissage (3) est couplé à un taquet (6a) pour en limiter l'ouverture.

8. Véhicule automobile, **caractérisé en ce qu'**il comporte au moins un réservoir (200; 300) défini selon l'une quelconque des revendications précédentes.

## Patentansprüche

1. Flüssigkeitstank mit Entgasungsschlauch vom Typ Rücklaufschutz (200; 300), der einen Behälter (1; 30) umfasst, der aus einer Seitenwand (1c; 31c) gebildet ist, die mit einer oberen Wand (1s; 31) und unteren Wand (1i) verbunden ist, der beim Gebrauch eine Flüssigkeit (9) bis zu einem bestimmten maximalen Pegel (10") enthalten kann, der einen Füllschlauch (3) umfasst, der einen unteren Abschnitt (3b) aufweist, der mit der Seitenwand (1c) des Behälters (1; 30) verbunden ist, sowie einen Entgasungsschlauch (2'), der ein unteres Ende (2b') aufweist, das senkrecht an der Seitenwand (1c) des Behälters (1; 30) an dem bestimmten maximalen Pegel (10") verbunden ist, und ein oberes Ende (2a), das mit einem oberen Abschnitt (3a) des Füllschlauches (3) verbunden ist, **dadurch gekennzeichnet, dass** der untere Abschnitt (3b) mit einer Schließklappe (6) versehen ist, und dass sich das untere Ende (2b') des Entgasungsschlauchs (2') in dem Behälter durch einen Blindansatz (20; 40) parallel zu der oberen und unteren Wand des Behälters (1; 30) verlängert und mit einer "Pfeifen"-Öffnung (21; 41), die gegenüber der unteren Wand (1i) des Behälters (1; 30) eingerichtet ist, wobei die "Pfeifen"-Öffnung (21; 41) ein Ausmaß aufweist, das ausreicht, um ein lufttechnisches Abfließen von Gas in den Entgasungsschlauch (2') zu erlauben, während sie gleichzeitig ausreichend begrenzt ist, um Flüssigkeit (9) in dem Ansatz zu blockieren, wenn der Flüssigkeitspegel (10", 10i) die "Pfeifen"-Öffnung (21; 41) erreicht.

2. Flüssigkeitstank mit Entgasungsschlauch nach dem vorstehenden Anspruch, **dadurch gekennzeichnet, dass** der Behälter (1; 30) aus einer Seitenwand (1c; 31c) besteht, die senkrecht mit einer oberen (1s; 31) und unteren (1i) Wand verbunden ist.

3. Flüssigkeitstank mit Rücklaufschutz-Entgasungsschlauch (200; 300) nach Anspruch 1 oder 2, wobei der Blindansatz (20; 40) des Entgasungsschlauchs (2') aus einer zylindrischen Wand (22; 42) besteht, die mit einer Bodenwand (23, 43) abgeschlossen ist und eine untere Halbwand (22i) aufweist, in der die "Pfeifen"-Öffnung (21, 41) ausgeschnitten ist.

4. Flüssigkeitstank mit Rücklaufschutz-Entgasungsschlauch (200; 300) nach einem der vorstehenden Ansprüche, wobei die "Pfeifen"-Öffnung (21, 41) einen Ausschnitt mit einer Form aufweist, die aus länglich, kreisförmig und vieleckig ausgewählt ist und sich längs in der unteren Halbwand (22i) in einem angepassten Ausmaß erstreckt, das die Bodenwand des Ansatzes (23; 43) und die Seitenwand (1c, 31c) des Behälters (1, 30) erreichen kann.

5. Tank nach dem vorstehenden Anspruch, **dadurch gekennzeichnet, dass** die "Pfeifen"-Öffnung (21, 41) einen Ausschnitt mit rechteckiger Form aufweist.

6. Flüssigkeitstank mit Rücklaufschutz-Entgasungsschlauch (200; 300) nach einem der vorstehenden Ansprüche, wobei der Behälter (30) eine Innenwand (32) umfasst, die sich von der oberen Wand (31) des Behälters (30) bis zu einem Pegel erstreckt, der niedriger ist als der bestimmte maximale Flüssigkeitspegel (10"), wobei diese Innenwand (31) den Behälter (30) in eine Hauptzone (P) zum Füllen mit Flüssigkeit und eine Nebenzone (A), in der sich der Ansatz des Entgasungsschlauchs (40) befindet, teilt, um eine Gasreserve in dem oberen Teil (As) der Nebenzone (A) zu isolieren.

7. Flüssigkeitstank mit Rücklaufschutz-Entgasungsschlauch (200; 300) nach einem der vorstehenden Ansprüche, wobei die Verschlussklappe (6) des Füllschlauches (3) mit einem Mitnehmer (6a) gekoppelt ist, um dessen Öffnung einzuschränken.

8. Kraftfahrzeug, **dadurch gekennzeichnet, dass** es mindestens einen Tank (200; 300) umfasst, der gemäß einem der vorstehenden Ansprüche definiert ist.

## Claims

1. A liquid tank with a venting pipe of the backflow-preventing type (200; 300) comprising a vessel (1; 30), composed of a lateral wall (1c; 31c) connected to upper (1s; 31) and lower (1i) walls, able to contain in use a liquid (9) up to a specified maximum level (10"), comprising a filling pipe (3) having a lower portion (3b) connected to the lateral wall (1c) of the vessel (1; 30), and a venting pipe (2') having a lower end (2b') connected perpendicularly to the lateral wall (1c) of the vessel (1; 30) at said specified maximum level (10"), and an upper end (2a) connected to an upper portion (3a) of the filling pipe (3), **characterized in that** said lower portion (3b) is provided with a shut-off valve (6), and **in that** the lower end (2b') of the venting pipe (2') extends in the vessel by a blind end piece (20; 40) parallel to the upper and lower walls of the vessel (1; 30) and provided with a "whistle"-type opening (21; 41) arranged facing the lower wall (1i) of the vessel (1; 30), said "whistle"-type opening (21, 41) having a sufficient extent to permit an aeraulic flow of gas in the venting pipe (2'), whilst being sufficiently limited to block the liquid (9) in the end piece when the level of liquid (10", 10i) reaches the "whistle"-type opening (21, 41).

2. The liquid tank with a venting pipe according to the preceding claim, **characterized in that** the vessel (1; 30) is composed of a lateral wall (1c; 31c) connected perpendicularly to upper (1s; 31) and lower (1i) walls.

3. The liquid tank with a backflow-preventing venting pipe (200; 300) according to Claim 1 or 2, in which the blind end piece (20; 40) of the venting pipe (2') is composed of a cylindrical wall (22; 42) terminated by a base wall (23, 43) and having a lower half-wall (22i) in which in which the "whistle-type" opening (21, 41) is cut out.

4. The liquid tank with a backflow-preventing venting pipe (200; 300) according to any one of the preceding claims, in which the "whistle-type" opening (21, 41) has a cutout having a shape selected from oblong, circular and polygonal, and extending longitudinally in the lower half-wall (22i) in an appropriate measurement being able to be reach the base wall of the end piece (23, 43) and the lateral wall (1c, 31c) of the vessel (1, 30).

5. The tank according to the preceding claim, **characterized in that** the "whistle-type" opening (21, 41) has a cutout of rectangular shape.

6. The liquid tank with a backflow-preventing venting pipe (200; 300) according to any one of the preceding claims, in which the vessel (30) comprises an internal partition (32) extending from the upper wall (31) of the vessel (30) up to a lower level than the specified maximum liquid level (10"), this internal partition (31) dividing the vessel (30) into a main liquid filling zone (P) and a secondary zone (A) in which the end piece of the venting pipe (40) is situated, so as to isolate a gaseous reserve in the upper part (As) of the secondary zone (A).

7. The liquid tank with a backflow-preventing venting pipe (200; 300) according to any one of the preceding claims, in which the shut-off valve (6) of the filling pipe (3) is coupled to a stop (6a) to limit the opening thereof.

8. A motor vehicle, **characterized in that** it comprises at least one tank (200; 300) defined according to any one of the preceding claims.
